Europäisches Patentamt

European Patent Office

Office européen des brevets

(11) Numéro de publication : **0 508 920 A1**

# (12) DEMANDE DE BREVET EUROPEEN

(21) Numéro de dépôt : **92440038.5**

(22) Date de dépôt : **27.03.92**

(51) Int. Cl.$^5$ : **A21C 1/14,** B65B 69/00

(30) Priorité : **12.04.91 FR 9104681**

(43) Date de publication de la demande :
**14.10.92 Bulletin 92/42**

(84) Etats contractants désignés :
**AT BE CH DE DK ES GB GR IT LI LU NL PT SE**

(71) Demandeur : **Société à responsabilitée dite:
Société Industrielle de Levure Fala
8 rue de St Nazaire
F-67100 Strasbourg (FR)**

(72) Inventeur : **Chassard,Jean-Pierre
9,rue Kastler
F-67113 Blaesheim (FR)**
Inventeur : **Meyvaert,José
13,rue du Couvent
F-67114 Eschau (FR)**

(74) Mandataire : **Aubertin, François
Cabinet Lepage & Aubertin Innovations et
Prestations 4, rue de Haguenau
F-67000 Strasbourg (FR)**

(54) **Dispositif pour l'alimentation en continu et au travers d'un doseur d'un pétrin de boulangerie en levure granulée.**

(57) L'invention concerne un dispositif pour l'alimentation, en continu et au travers du doseur (4), d'un pétrin de boulangerie en levure boulangère, se présentant sous forme de granules et conditionnée en sacs, ce dispositif comporte des moyens de vidage à débit réglable (2) d'au moins un sac (3) de levure granulée, ces moyens de vidage (2) assurant l'approvisionnement, selon un débit contrôlé, d'un doseur (4) en levure granulée.

FIG. 1

EP 0 508 920 A1

Jouve, 18, rue Saint-Denis, 75001 PARIS

L'invention concerne un dispositif pour l'alimentation, en continu et au travers d'un doseur, d'un pétrin de boulangerie en levure boulangère se présentant sous forme de granules et conditionnée en sacs.

Ainsi et si l'on se reporte, plus particulièrement, à ce domaine de la boulangerie, l'on connaît déjà, notamment, par le document FR-A-2.645.712, un procédé ainsi qu'un dispositif pour le dosage automatique de levure fraîche destinée à être incorporée dans un pétrin de boulangerie.

Selon ce procédé connu dans ce document, il s'agit d'assurer le remplissage d'une extrudeuse avec une quantité convenable de levure fraîche. Cette levure est, ensuite, extraite, selon un débit contrôlé, sous forme de granules à partir de ladite extrudeuse. A noter, en outre, qu'au cours de cette extraction, il est assuré un brassage à l'intérieur de ladite extrudeuse pour éviter le colmatage, notamment par formation de voûte.

En ce qui concerne le dispositif permettant la mise en oeuvre de ce procédé, il se présente sous forme d'une extrudeuse constituée d'une trémie horizontale dans le fond de laquelle est implantée une vis d'Archimède travaillant en rotation.

Quant aux moyens de brassage, ceux-ci se présentent sous forme de deux axes longitudinaux montés, respectivement, de part et d'autre et au-dessus de la vis d'Archimède, sur ces axes longitudinaux étant fixés des racleurs transversaux.

En fait et tel que cela ressort au travers de la description dans ce document antérieur, l'on constate que le dispositif s'applique, principalement, à de la levure fraîche conditionnée sous forme de pains de dimensions et de poids variables ou en granules en vrac.

Ainsi, lorsqu'elle se présente, précisément, sous forme de pain, cette levure, dans le cadre de ce dispositif antérieur, est, tout d'abord, broyée à la fois au travers de moyens de brassage et des moyens d'extraction.

Notons, de plus, que, même dans le cas où cette levure fraîche se présente sous forme de granules, il est nécessaire de disposer de moyens de brassage en prévision du risque de rupture d'alimentation des moyens d'extraction sous l'effet de la formation de voûte au-dessus de la vis d'Archimède constituant ces moyens d'extraction. Il convient de préciser, également, à ce propos, que ce risque de voûtage est d'autant plus important que la levure présente des proportions de matière sèche faible.

Par ailleurs, ce risque de voûtage ne persiste qu'en raison d'une alimentation trop importante du doseur. Or, cette alimentation en surabondance est, précisément, inévitable, dans ce cas, si l'on désire aboutir au résultat recherché, à savoir une intervention manuelle aussi réduite que possible pour assurer une alimentation en continu ou quasi continu du pétrin de boulangerie en levure.

Si l'on tient compte, à présent, du fait que la levure est un produit vivant et que tout échauffement ou que tout contact avec l'air ambiant, avant utilisation de cette levure, représentent des facteurs limitant dans la mesure où cette levure voit son efficacité diminuer, le dispositif antérieur est des moins recommandable. En effet, qu'il s'agisse du broyage ou encore du brassage, ces actions sur la levure ne peuvent que provoquer une augmentation de la température de cette dernière et des contacts avec l'air ambiant.

Il s'agit donc, contrairement à ce qui est préconisé au travers du procédé décrit dans ce document antérieur, de réduire, au minimum, le temps de séjour et les efforts mécaniques exercés sur la levure dans le dispositif de dosage.

De même, il y a lieu d'éviter toute contamination de cette levure lors de son passage dans ce dispositif de dosage. A ce propos, ce risque est d'autant plus important que les surfaces avec lesquelles la levure entre en contact, sont elles-mêmes importantes. En effet, de telles surfaces doivent être maintenues parfaitement propres et déchargées de tout élément microbien contaminant. Ainsi, plus cette surface de contact est importante, plus le nettoyage est difficile et nécessite un temps d'intervention manuel long. Notons qu'en cas où ces surfaces sont, en plus, difficilement accessible, ce nettoyage devient des plus fastidieux et représente une perte de temps non acceptable par l'usager. Or, il est bien évident que l'on retrouve l'ensemble de ces inconvénients dans le cadre du dispositif de dosage décrit dans le document FR-A-2.645.712 ou d'autre procédés qui se basent sur des suspensions de la levure dans l'eau avant dosage.

En fait, la présente invention se propose de remédier à l'ensemble des inconvénients précités, d'une part, au travers d'un dispositif permettant d'alimenter un doseur en levure granulée contenue dans des sacs, ceci avec un débit parfaitement régulé. Ce doseur peut, ainsi, contenir, en permanence, une quantité réduite de cette levure de manière à éviter, précisément, tout risque de voûtage que l'on rencontrait dans le passé. En assurant par ailleurs, l'extraction de la levure, directement des sacs la contenant, le dispositif conforme à l'invention permet d'éviter les contact inutiles de cette levure avec l'air ambiant, d'éliminer les efforts mécaniques et de limiter les risques de détérioration ou d'échauffement exagéré.

Ces inconvénients correspondant à l'état antérieur de la technique sont éliminés, d'autre part, par un doseur qui, lorsqu'il est appliqué au dispositif d'alimentation précité permet de limiter considérablement les surfaces en contact avec la levure avant qu'il en soit fait usage dans un pétrin de boulangerie. Cette invention permet, ainsi, de minimiser les risques de contamination.

L'invention telle qu'elle est caractérisée dans les revendications résout le problème et consiste en un dispositif pour l'alimentation en continu et au travers d'un doseur, d'un pétrin de boulangerie en levure boulangère se présentant sous forme de granules et conditionnée en sac, ce dispositif comportant, en outre, des moyens de vidage à débit réglable d'au moins un sac de levure granulée, ces moyens de vidage assurant l'approvisionnement, selon un débit contrôlé, d'un doseur en levure granulée.

Selon cette invention, ces moyens de vidage à débit réglable d'un sac sont constitués, préférentiellement, par des moyens de soutènement à inclinaison variable du sac, à ces moyens de soutènement étant associés des moyens de vibrations réglables pour garantir l'écoulement de la levure granulée, selon un débit déterminé du sac le contenant.

Quant au doseur associé à ces moyens de vidage à débit réglable d'un sac, il est constitué, préférentiellement, par une trémie dans laquelle s'écoule la levure granulée, cette trémie surmontant, selon une hauteur réglable, un couloir vibrant assurant l'évacuation, selon un débit contrôlé de cette levure au niveau d'un pétrin de boulangerie.

Les principaux avantages obtenus grâce à cette invention consistent, essentiellement, en ce que l'on peut utiliser des sacs contenant de la levure granulée et, plus particulièrement, de la levure pressée sans qu'il n'y ait de risque important, à un moment donné ou un autre, d'une contamination, d'un échauffement, d'un effort mécanique ou encore d'un contact trop important avec l'air ambiant de cette levure. En outre, s'agissant d'une levure granulée, il n'est pas nécessaire d'en assurer le broyage ou la mise en suspension préalablement à son utilisation.

De plus, étant donné que le dispositif conforme à l'invention, permet d'alimenter de manière régulière un doseur, quel que soit sa forme, celui-ci ne peut contenir qu'une quantité limitée de levure ce qui vient à éliminer le risque de voûtage et permet la suppression des moyens de brassage.

Finalement, le doseur, préférentiel à l'invention, permet d'éviter les risques de contamination de cette levure en raison de surfaces de contact avec cette dernière d'importance limitée et, en tous les cas, de nettoyage facile.

L'invention est exposée ci-après plus en détail à l'aide de dessins représentant seulement un mode d'exécution.

– la figure 1 représente une vue schématisée et en élévation du dispositif conforme à l'invention ;
– la figure 2 représente une vue schématisée et en plan des moyens de soutènement des sacs de levure granulée en vue de leur vidange ;
– la figure 3 représente une vue schématisée et en élévation du doseur conforme à l'invention ;
– la figure 4 représente une vue schématisée et en plan du couloir, soumis à des moyens de vibration, au-dessus duquel est placée la trémie correspondant au doseur conforme à l'invention.

La présente invention est relative à un dispositif pour l'alimentation en continu et au travers d'un doseur, d'un pétrin de boulangerie en levure boulangère se présentant sous forme de granules conditionnée en sacs.

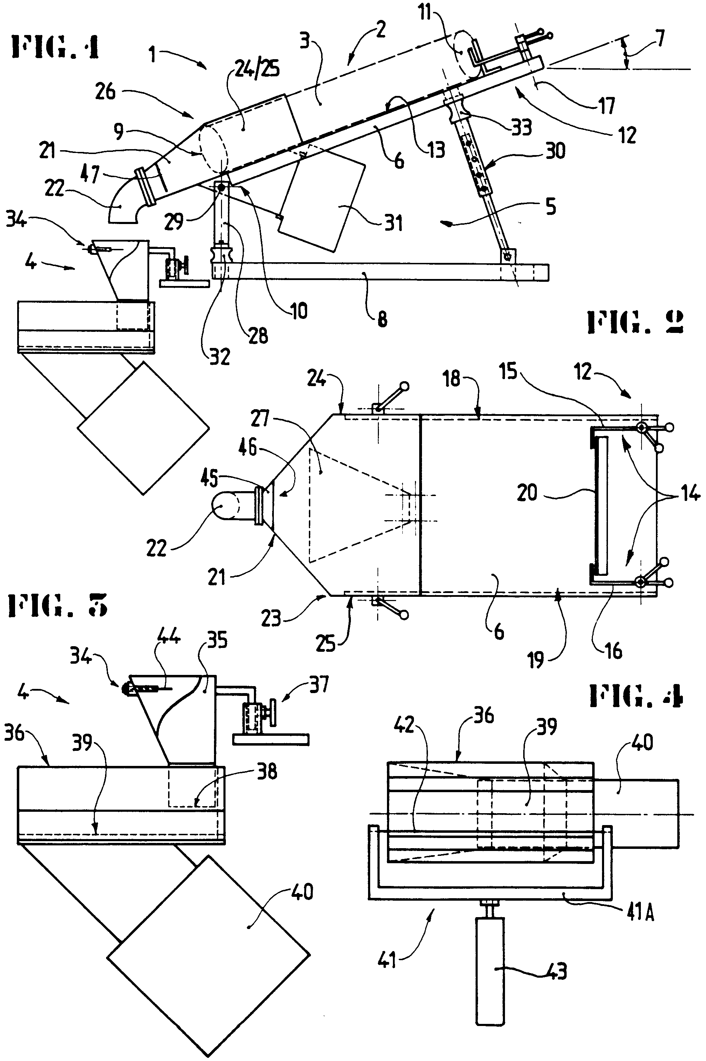

Ainsi et tel que ceci apparaît au vu de la figure 1 du dessin joint en annexe, ce dispositif 1 comporte des moyens de vidage à débit réglable 2 d'au moins un sac 3 de levure granulée.

En fait, ces moyens de vidage 2 ont pour fonction, proprement dite, d'assurer l'approvisionnement, selon un débit contrôlé, d'un doseur 4 de cette levure granulée contenue dans le sac 3.

Ce doseur 4 se doit, en fin de compte, d'alimenter un pétrin de boulangerie en levure granulée et, ceci, selon un débit constant qui, par ailleurs, doit être réglable.

Ainsi et selon l'invention, lesdits moyens de vidage à débit réglable 2 comportent, initialement, des moyens de soutènement 5 d'au moins un sac 3 de levure granulée. Ces moyens de soutènement 5 se présentent, en fait, sous forme d'un plateau 6 d'inclinaison 7 réglable par rapport à l'horizontale et supporté par un bâti 8.

En fait, sur ce plateau 6 vient à reposer un sac 3 de telle sorte que l'embouchure 9 de ce dernier se situe au niveau de l'une des extrémités 10 (dénommée extrémité avant) dudit plateau 6 et que le fond 11 de ce sac 3 se présente orienté en direction de l'extrémité opposée 12 (dénommée extrémité arrière) de ce plateau 6.

A noter, à ce propos, qu'à hauteur de cette extrémité arrière 12 du plateau 6 et sur la face supérieure 13 de ce dernier sont aménagés des moyens de préhension et de maintien 14 du sac 3.

Selon un mode de réalisation avantageux de l'invention, ces moyens de préhension et de maintien 14 sont destinés à agripper le sac 3 au niveau des replis formés par ce dernier dans son fond 11. Ainsi, ces moyens de préhension et de maintien 14 sont constitués par des griffes 15, 16 montées pivotantes autour d'un axe 17 perpendiculaire au plan du plateau 6 et à hauteur de cette extrémité arrière 12 et en bordure latérale 18, 19 de ce dernier.

A noter, en outre, la présence, sur cette face supérieure 13 et au niveau de l'extrémité arrière 12 du plateau 6, d'une butée 20 contre laquelle les griffes 15, 16 maintiennent le fond 11 d'un sac 3.

Quant à l'extrémité avant 10 de ce plateau 6, elle est munie d'un entonnoir 21 orientant le produit granulé en direction d'un embout coudé 22 au travers duquel cette levure granulée est, précisément, déversée dans le doseur 4.

Selon l'invention, cet entonnoir 21 est prolongé, à hauteur de son extrémité évasée 23, de parois latérales verticales 24, 25 s'étendant en partie le long des bordures latérales 18, 19 du plateau 6.

Par ailleurs, ledit entonnoir 21 comporte, dans sa partie supérieure 26 un capot amovible 27 venant, également, à s'étendre, en partie, au-dessus du plateau 6.

En fait, tant ce capot amovible 27 que les parois latérales 24, 25, dudit entonnoir 21 ont pour fonction de maintenir enfermée l'embouchure 9 d'un sac 3 ce qui vient à limiter les contacts de la levure granulée avec l'air ambiant.

Ledit plateau 6 est rendu solidaire du bâti support 8, au niveau de son extrémité avant 10 au moyen de deux montants 28 sur lesquels il est, par ailleurs, relié au travers d'articulations 29 se situant à l'extrémité supérieure de ces montants 28. Cette disposition a pour but d'autoriser le pivotement, autour d'un axe horizontal, de ce plateau 6 à hauteur de son extrémité avant 10 et, ceci sous l'impulsion de moyens de réglage 30 de son inclinaison 7 implantés au-dessous dudit plateau 6, sensiblement à hauteur de son extrémité arrière 12.

A titre d'exemple, de tels moyens de réglage 30 peuvent se présenter sous forme de bras télescopique interposés entre le plateau 6 et le bâti support 8, tel que ceci apparaît dans la figure 1 du dessin joint en annexe.

Les moyens de vidage 2 d'un sac 3 contenant la levure granulée comportent, en dehors desdits moyens de soutènement 5 d'un tel sac 3, des moyens moteurs 31 pour soumettre le plateau 6 que composent ces moyens de soutènement 5 à un mouvement vibratoire d'amplitude variable, ceci en vue d'obtenir un vidage à débit réglable dudit sac 3.

Ces moyens moteurs 31 qui peuvent être constitués par un dispositif vibrant quelconque, notamment de type électromagnétique, sont placés directement sous le plateau 6 lequel comporte, au niveau de ses liaisons avec le bâti support 8, des silentblocs 32, 33 autorisant, précisément, à ce plateau 6, d'emprunter un mouvement vibratoire sans que celui-ci ne se répercute au sol ou encore au niveau du bâti.

Notons, qu'en ce qui concerne l'inclinaison 7 du plateau 6, elle est déterminée en début d'opération et elle dépendra, principalement, de la qualité de la levure granulée. Ainsi, cette levure peut être pressée ou partiellement séchée, congelée fraîche ou encore sèche.

Quant à l'amplitude des vibrations et au fonctionnement des moyens moteurs 31 qui les engendrent ils sont fonction de moyens 34 venant à contrôler le débit d'alimentation du doseur 4. Bien entendu, de tels moyens de contrôle 34 peuvent être divers et l'on citera, à titre d'exemple, les moyens de pesage ou tout moyen permettant de contrôler un niveau de produits granulés au niveau de ce doseur 4.

A ce propos, l'on observera que les moyens de vidage 2 tels que décrits ci-dessus peuvent être associés à tout type de doseur 4 et, notamment, à un doseur à vis d'Archimède correspondant à l'état antérieur de la technique. Toutefois, il convient de remarquer qu'en raison de ces moyens 2 permettant un vidage d'un sac 3 selon un débit parfaitement réglable, l'on pourra alimenter de manière continue et selon des quantités réduites, un tel doseur à vis d'Archimède ce qui permet d'éviter les risques de voûtage et, finalement, autorise la suppression des moyens de brassage. En effet, en raison de l'échauffement que procurent ces dernières ils sont à considérer comme néfastes pour le traitement de produits vivants, tels que la levure de boulangerie.

Cependant, de tels doseurs à vis d'Archimède ne présentent pas moins l'inconvénient d'offrir une surface de contact importante avec la levure granulée. Cette surface, dont le nettoyage est, de plus, rendu difficile, ne fait qu'augmenter le risque de contamination de la levure boulangère.

Ainsi, la présente invention concerne, également, un doseur 4 permettant de limiter, précisément, ses surfaces en contact avec la levure granulée, tout en assurant un nettoyage particulièrement facile de ces surfaces.

Ce doseur 4 comporte, avantageusement, une trémie 35 se situant au-dessous de l'embout coudé 22 au travers duquel s'écoule la levure granulée en provenance des moyens de vidage 2 de sacs 3. Cette trémie 35 surmonte un couloir vibrant 36 lequel vient à acheminer, selon un débit régulier qui, par ailleurs, est réglable, la levure granulée en direction d'un pétrin de boulangerie.

En fait et selon un mode de réalisation préférentiel, le réglage du débit d'évacuation de levure granulée est déterminé au travers de moyen de réglage en hauteur 37 de la trémie 35 par rapport au couloir 36.

Plus précisément, plus l'extrémité inférieure 38 de la trémie 35 est distante du fond 39 correspondant au couloir vibrant 36, plus il y a de levure qui vient à se déverser par unité de temps, dans ledit couloir 36.

A noter, en outre, que ce débit peut encore être régulé en intervenant sur la fréquence et l'amplitude des vibrations transmises au couloir 36 au travers de moyens moteurs appropriés 40.

Il est encore obtenu une meilleure régularité de ce débit d'évacuation de levure granulée en évitant la formation d'un dépôt dans le fond 39 dudit couloir vibrant 36.

Des moyens de grattage 41 du fond 39 de ce couloir vibrant sont, précisément, associés, dans ce but, au doseur 4 conforme à l'invention.

Préférentiellement de tels moyens de grattage 41 se présentent sous forme d'au moins un filin 42 tendu par l'intermédiaire de moyen de maintien 41A, au-dessus du fond 39 correspondant au couloir 36 et, ce, dans le sens longitudinal de ce dernier. Ce ou ces filins 42 sont, par ailleurs, soumis à un mouvement alternatif, transversalement audit couloir 36 et dans un plan parallèle au fond 39 de ce dernier. Un organe moteur, tel qu'un vérin 43, est en mesure de conférer ce mouvement alternatif à ce ou ces filins 42, ceci au travers des moyens 41A assurant le maintien de ces derniers. Bien entendu, tout autre moyen moteur susceptible d'assurer cette fonction pourra convenir.

Il convient de remarquer que, hormis le ou les filins 42 permettant d'obtenir le grattage désiré, un second filin peut être tendu au-dessus de celui ou ceux précités, non pas pour garantir la répartition, proprement dite, de la levure granulée mais, plus particulièrement, dans le but de casser les mottes de levure qui auraient, éventuellement, pu se former, notamment, durant leur séjour dans le sac de conditionnement.

Bien entendu, la suppression de ces mottes contribue, également, à garantir une meilleure régularité dans le débit d'approvisionnement d'un pétrin de boulangerie en produit levure granulée. A ce propos, il convient d'observer que la destruction de ces mottes de levure peut déjà être assurée à hauteur des moyens de vidage 2 d'un sac 3. Ainsi, dans le fond 45 de l'entonnoir 21 peut être implanté un dispositif 46 destiné précisément, à casser ces mottes de levure. Préférentiellement, un tel dispositif 46 se présente sous forme d'un peigne 47 rendu solidaire, par exemple, du capot amovible 27 et, qui, sous l'effet des vibrations transmises aux moyens de soutènement 5, vient à remplit efficacement sa fonction sans qu'il n'y ait de risque de colmatage.

Tel que déjà précisé plus haut dans cette description, des moyens de contrôle 34 sont susceptibles d'être associés au doseur 4 en vue d'assurer une alimentation sans excès de ce dernier au travers des moyens de vidage 2 de sacs 3.

Ainsi, à titre d'exemple, de tels moyens de contrôle 34 peuvent être constitués, substantiellement, par une sonde résistive 44 placée à une certaine hauteur dans la trémie 35 dudit doseur 4. Ainsi, lorsque la levure granulée atteint cette sonde résistive 44, l'information lue au travers de cette dernière peut être traduite sous forme de commande d'arrêt du fonctionnement des moyens moteurs 31 soumettant le plateau 6 à un mouvement vibratoire.

De tels moyens de contrôle 34 peuvent, bien entendu, adopter toute autre forme. Ainsi, ces moyens de contrôle 34 peuvent se présenter sous forme de moyens de pesage susceptibles de détecter la présence d'une quantité suffisante ou, au contraire, un manque de levure dans la trémie 35 et, par conséquent, aptes à stopper ou au contraire de commander l'alimentation de cette trémie 35 en levure au travers des moyens de vidage 2 de sacs 3.

Finalement, l'on observe que dans le cadre du doseur 4, conforme à l'invention, les surfaces en contact avec la levure granulée sont limitées au minimum dans la mesure où seules les parois de la trémie 35 et celles du couloir vibrant 36 sont, ainsi, exposées à ce contact. De plus, les risques de contamination au travers d'un tel contact sont évités autant que possible, puisque cette trémie et ce couloir sont de nettoyage facile car tous les recoins sont aisément accessibles par un opérateur.

On retrouve ces mêmes avantages au niveau des moyens de vidage 2 de sacs 3. En effets, seul l'entonnoir 21 et sa terminaison en forme d'embouts coudés 22 sont en contact avec la levure granulée.

Il est bien évident que les avantages qui viennent d'être cités correspondant à la présente invention et ceux liés à la réduction du contact de la levure granulée avec l'atmosphère ambiant avant d'être introduit dans le pétrin de boulangerie, font, précisément, que cette invention représente un net progrès par rapport à l'éclat antérieur de la technique. A noter, en outre, que ce progrès à pu être atteint au travers d'un dispositif de conception particulièrement simplifiée ce qui le rend, à la fois, économiquement et qualitativement plus intéressant aux dispositif existants.

**Revendications**

1. Dispositif pour l'alimentation en continu et au travers d'un doseur (4) d'un pétrin de boulangerie en levure boulangère se présentant sous forme de granules et conditionnée en sacs (3), caractérisé par le fait qu'il comporte des moyens de vidage à débit réglable (2) d'au moins un sac (3) de levure granulée, ces moyens de vidage (2) assurant l'approvisionnement, selon un débit contrôlé, d'un doseur (4) en levure granulée.

2. Dispositif selon la revendication 1 caractérisé par le fait que les moyens de vidage à débit réglable (2) d'un sac (3) comportent des moyens de soutènement (5) de ce sac (3), moyens se présentant sous forme d'un plateau (6) d'inclinaison (7) réglable par rapport à l'horizontal et supporté par un bâti (8).

3. Dispositif selon la revendication 2, caractérisé par le fait qu'un sac (3) vient à reposer sur le plateau (6) de sorte que son embouchure (9) se situe au niveau de l'extrémité avant (10) de ce dernier et que le fond (11) de ce sac (3) se présente orienté en direction de l'extrémité arrière (12) de ce plateau (6) où sont aménagés des moyens de préhension et de maintien (14) dudit sac (3).

4. Dispositif selon la revendication 3, caractérisé par le fait que les moyens de préhension et de maintien (14) sont constitués par des griffes (15, 16) montées pivotantes, autour d'un axe (17) perpendiculaire au plan du plateau (6), à hauteur de l'extrémité arrière (12) et en bordure latérale (18, 19) de ce dernier, ces griffes (15, 16) venant à coopérer avec les replis formés par le sac (3) dans son fond (11), sur la face supérieure (13) et au niveau de cette extrémité arrière (12) dudit plateau (6) étant aménagée, en outre, une butée (20) contre laquelle lesdites griffes (15, 16) maintiennent le fond (11) du sac (3).

5. Dispositif selon la revendication 3, caractérisé par le fait que le plateau (6) est muni, à hauteur de son extrémité avant (10), d'un entonnoir (21) susceptible d'orienter la levure granulée en direction d'un embout coudé (22) au travers duquel cette levure granulée est déversée dans le doseur (4).

6. Dispositif selon la revendication 5, caractérisé par le fait que l'entonnoir (21), d'un part, est prolongé, à hauteur de son extrémité évasée (23), de parois latérales verticales (24, 25) s'étendant en partie le long des bordures latérales (18, 19) du plateau (6) et, d'autre part, comporte, dans sa partie supérieure (26), un capot amovible (27) s'entendant, également, en partie au-dessus dudit plateau (6).

7. Dispositif selon les revendications 2 et 3, caractérisé par le fait que le plateau (6) est rendu solidaire du bâti support (8), d'une part, au niveau de son extrémité avant (10), par l'intermédiaire d'articulations (29) lui permettant de pivoter autour d'un axe horizontal et, d'autre part, à hauteur de son extrémité arrière (12) à l'aide de moyens de réglage (30) pour modifier son inclinaison (7) par rapport à l'horizontale.

8. Dispositif selon les revendications 1 et 2 caractérisé par le fait que les moyens de vidage à débit réglable (2) d'un sac (3) sont complétés par des moyens moteurs (31) aptes à soumettre le plateau (6), composant les moyens de soutènement (5), à un mouvement vibratoire d'amplitude variable pour obtenir un vidage à débit réglable dudit sac (3).

9. Dispositif selon la revendication 1, caractérisé par le fait que le doseur (4) se compose d'une trémie (35) surmontant un couloir vibrant (36) susceptible d'alimenter, selon un débit régulier et contrôlé, un pétrin de boulangerie en levure granulée.

10. Dispositif selon la revendication 9, caractérisé par le fait que la trémie (35) du doseur (4) comporte des moyens (37) permettant son réglage en hauteur par rapport audit couloir vibrant (36) pour permettre le contrôle du déversement de la levure granulée, par unité de temps dans ce couloir vibrant (36).

11. Dispositif selon la revendication 9, caractérisé par le fait que le doseur (4) comporte des moyens de grattage (41) du fond (39) correspondant au couloir vibrant (36) pour garantir une parfaite régularité du débit d'évacuation de la levure granulée.

12. Dispositif selon la revendication 11, caractérisé par le fait que lesdits moyens de grattage (41) se présentent sous forme d'au moins un filin (42) tendu, par l'intermédiaire de moyens de maintien appropriés (41A), au-dessus du fond (39), correspondant au couloir vibrant (36), et dans le sens longitudinal de ce dernier, ce ou ces filins (42) étant soumis à un mouvement alternatif, transversalement audit couloir vibrant (36) au travers d'un organe moteur, tel qu'un vérin (43).

13. Dispositif selon la revendication 9, caractérisé par la fait que le doseur (4) comporte des moyens de contrôle (34) du débit de son alimentation en levure granulée par l'intermédiaire des moyens de vidage à débit réglable (2) d'un sac (3), ces moyens de contrôle (34) commandant l'arrêt ou le fonctionnement des moyens moteurs (31) soumettant à un mouvement vibratoire le plateau (6) composant les moyens de soutènement (5).

14. Dispositif selon la revendication 5, caractérisé par le fait qu'il comporte un dispositif (46) pour casser les mottes de levure granulée en sortie du sac (3), ce dispositif (46) étant formé par un peigne (47) situé dans le fond (45) de l'entonnoir (21).

FIG. 1

FIG. 2

FIG. 3

FIG. 4

Office européen
des brevets

**RAPPORT DE RECHERCHE EUROPEENNE**

Numero de la demande

EP    92 44 0038

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-185 583 (GUTMANN)<br>--- | 1 | A21C1/14<br>B65B69/00 |
| A | FR-A-2 367 688 (RIBOT)<br>--- | | |
| A | FR-A-1 371 051 (NYA)<br>--- | | |
| A | EP-A-0 015 861 (S.A.T.I.L.)<br>--- | | |
| A | US-A-2 737 129 (JOHNSON)<br>----- | | |

**DOMAINES TECHNIQUES RECHERCHES (Int. Cl.5)**

A21C
B28C
B65B

Le présent rapport a été établi pour toutes les revendications

| Lieu de la recherche | Date d'achèvement de la recherche | Examinateur |
|---|---|---|
| LA HAYE | 28 JUILLET 1992 | PEETERS S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

8